(19) Europäisches Patentamt
European Patent Office
Office européen des brevets

(11) EP 0 986 592 B1

(12) **FASCICULE DE BREVET EUROPEEN**

(45) Date de publication et mention de la délivrance du brevet:
**20.04.2005 Bulletin 2005/16**

(21) Numéro de dépôt: **99909046.7**

(22) Date de dépôt: **19.03.1999**

(51) Int Cl.[7]: **C08G 18/08**, C08G 18/69, C09D 175/14, C08G 18/12

(86) Numéro de dépôt international:
**PCT/FR1999/000638**

(87) Numéro de publication internationale:
**WO 1999/048941 (30.09.1999 Gazette 1999/39)**

(54) **DISPERSIONS AQUEUSES DE POLYURETHANE ET LEUR PROCEDE DE PREPARATION**

WÄSSRIGE POLYURETHANDISPERSIONEN UND IHR HERSTELLUNGSPROZESS

POLYURETHANE AQUEOUS DISPERSIONS AND PREPARATION METHOD

(84) Etats contractants désignés:
**AT BE CH DE FR GB IT LI NL SE**

(30) Priorité: **25.03.1998 FR 9803793**

(43) Date de publication de la demande:
**22.03.2000 Bulletin 2000/12**

(73) Titulaire: **ARKEMA**
**92800 Puteaux (FR)**

(72) Inventeurs:
- **FLAT, Jean-Jacques**
**F-27470 Serquigny (FR)**
- **PRADEL, Jean-Laurent**
**F-27300 Bernay (FR)**
- **FONTELA, Jacques**
**F-27300 Bernay (FR)**

(74) Mandataire: **Chaillot, Geneviève**
**Cabinet CHAILLOT,**
**16-20, avenue de L'Agent Sarre,**
**B.P. 74**
**92703 Colombes Cédex (FR)**

(56) Documents cités:
**EP-A- 0 331 409**
**US-A- 4 644 030**
**US-A- 5 672 653**

Remarques:
Le dossier contient des informations techniques présentées postérieurement au dépôt de la demande et ne figurant pas dans le présent fascicule.

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 986 592 B1

Printed by Jouve, 75001 PARIS (FR)

## Description

L'invention concerne des dispersions aqueuses de polyuréthane et leur procédé de préparation.

Pour des raisons environnementales l'industrie des revêtements et des adhésifs fait dorénavant appel à des systèmes en phase aqueuse. Les polyuréthanes, couramment utilisés dans ce domaine, nécessitent l'insertion de groupes ioniques dans leurs chaînes pour que leur dispersion dans l'eau soit possible.

On a décrit dans le brevet US 5672653 des dispersions aqueuses de polyuréthane préparées à partir d'un polyol comprenant au moins un polydiène à terminaisons hydroxyles.

On commence par préparer un prépolymère par réaction d'un polyol, d'un diisocyanate et d'un diol contenant des groupes acides

l'acide diméthylolpropionique 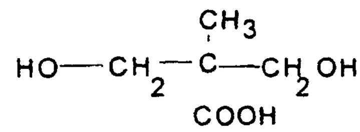

qui a été au préalable dissous dans la N-méthylpyrrolidone (NMP). La réaction se fait en présence d'un catalyseur (dilaurate de dibutyl-étain). Le rapport du nombre de fonctions NCO au nombre de fonctions OH(NCO/OH) est de 2 à 2,5.

Le polyol utilisé est un mélange de polybutadiène hydroxy téléchélique hydrophobe de haut poids moléculaire ($\overline{M}n$ = 2800) (par exemple polyBd® R45HT de la demanderesse) et de polyol moins hydrophobe comme le PolyBd® R20LM ou des polyéther polyols ou polyester polyols dans des rapports molaires PolyBd R45HT / autre polyol compris entre 60/40 et 30/70.

Ensuite on neutralise les fonctions acides par la triéthylamine, puis on ajoute de l'eau pour obtenir la dispersion du prépolymère. L'addition finale d'un allongeur de chaîne (éthylènediamine ou hydrate d'hydrazine) permet d'obtenir une dispersion aqueuse de polyuréthane urée. Un film peut alors être réalisé par évaporation.

Les produits décrits dans le brevet ci-dessus présentent deux caractéristiques :

① Présence de NMP résiduelle dans l'émulsion (à cause de sa température d'ébullition trop élevée pour être distillée aisément).

② La présence de polyols moins hydrophobes que le PolyBd R45HT dans l'émulsion de polyuréthane procure aux films issus de la PUD un caractère moins résistant à l'hydrolyse qu'espéré.

Selon les applications de ces dispersions, la présence de solvant résiduel et la sensibilité à l'hydrolyse peuvent être des inconvénients.

Le brevet US 4,644,030 décrit, notamment par son Exemple XII, un procédé de préparation d'une dispersion aqueuse de polyuréthane. Dans la première étape du procédé, on fait réagir un polyisocyanate avec des polyols avant addition d'un diol acide non préneutralisé sous forme de sel avec la triéthylamine, l'acide linoléique et le méthyl méthacrylate.

Le brevet EP 0 331 409 décrit un procédé de préparation d'une dispersion aqueuse de polyuréthane selon lequel une étape de neutralisation est prévue après la formation du prépolymère.

On a maintenant trouvé un procédé qui permet de résoudre ces deux problèmes.

Il consiste à d'abord neutraliser les fonctions acides de l'acide diméthylolpropionique puis à le mettre en solution dans la méthyléthylcétone. Ensuite on prepare le prépolymère comme décrit plus haut. L'invention concerne aussi des dispersions aqueuses ne contenant essentiellement plus de solvant et donnant après évaporation de l'eau des revêtements particulièrement résistants à l'hydrolyse.

La présente invention concerne un procédé de préparation de dispersions aqueuses de polyuréthane comprenant les étapes suivantes :

(a) formation d'un prépolymère (à fonctions NCO) par réaction dans un solvant d'un polyisocyanate, d'un polydiène à terminaisons hydroxyles et de masse Mn d'au moins 2000 et d'un diol contenant des fonctions acides neutralisées, les fonctions NCO étant en excès par rapport aux fonctions OH

(b) dispersion du prépolymère dans l'eau

(c) addition d'un allongeur de chaîne de type diamine

(d) évaporation du solvant pour obtenir une dispersion aqueuse de polyuréthane urée, avec le solvant tel qu'il permette d'effectuer la synthèse du prépolymère et de sorte que la dispersion aqueuse contienne moins de 0,2

% en poids de solvant

Les revêtements qu'on obtient à partir de ces dispersions sont particulièrement hydrophobes.

A titre d'illustration de polydiènes-polyols (polydiènes à terminaisons hydroxyles) utilisables selon la présente invention, on citera les oligomères de diène conjugué hydroxytéléchélique qui peuvent être obtenus par différents procédés tels que la polymérisation radicalaire de diène conjugué ayant de 4 à 20 atomes de carbone en présence d'un amorceur de polymérisation tel que le peroxyde d'hydrogène ou un composé azoïque tel que l'azobis-2,2'[méthyl-2, N-(hydroxy-2éthyl)propionamide] ou la polymérisation anionique de diène conjugué ayant de 4 à 20 atomes de carbone en présence d'un catalyseur tel que le naphtalène dilithium.

Selon la présente invention, le diène conjugué du polydiène-polyol est choisi dans le groupe comprenant le butadiène, l'isoprène, le chloroprène, le pentadiène-1,3, le cyclopentadiène. La masse molaire moyenne en nombre des polyols utilisables peut varier de 2000 à 15 000 et de préférence de 2000 à 5000.

Selon la présente invention, on utilisera de préférence un polydiène-polyol à base de butadiène. Avantageusement, le polydiène glycol comprend 70 à 85 % en mole de préférence 80 % de motifs

$$-(-CH_2-CH=CH-CH_2-)-$$

et 15 à 30 % de préférence 20 % de motifs

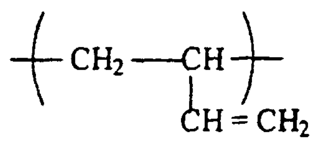

Conviennent également les copolymères de diènes conjugués et de monomères vinylique et acrylique tels que le styrène, l'acrylonitrile.

On ne sortirait pas de l'invention si on utilisait des oligomères hydroxytélécheliques de butadiène époxydés sur la chaîne ou bien encore des oligomères partiellement ou totalement hydrogénés hydroxytélecheliques de diènes conjugués.

L'indice d'OH ($I_{OH}$) exprimé en meq/g est compris entre 0,5 et 1,5 et de préférence 0,8 à 0,9. Leur viscosité est comprise entre 1000 et 10 000 m.Pa.s.

A titre d'illustration de polydiènes-polyols, on citera le polybutadiène à terminaisons hydroxylées commercialisé par la Société ELF ATOCHEM S.A. sous les dénominations Poly Bd®R45 HT.

Le prépolymère peut aussi contenir un diol court dans sa composition. Comme exemple de tel diol, on peut citer le 2 éthyl 1,3 hexanediol, le NN(bis2-hydroxypropyl)aniline. La quantité de tel diol est avantageusement comprise entre 1 et 30 parties en poids pour 100 parties de polydiène à terminaisons hydroxyles.

Selon la présente invention, le polyisocyanate utilisé peut être un polyisocyanate aromatique, aliphatique ou cycloaliphatique ayant au moins deux fonctions isocyanate dans sa molécule.

A titre d'illustration de polyisocyanate aromatique, on citera le 4,4'-diphényl-méthane diisocyanate (MDI), les MDI modifiés liquides, les MDI polymériques, le 2,4- et le 2,6-tolylène diisocyanate (TDI) ainsi que leur mélange, le xylylène diisocyanate (XDI), le triphénylméthane triisocyanate, le tétraméthylxylylène diisocyanate (TMXDI), le paraphénylène diisocyanate (PPDI), le naphtalène diisocyanate (NDI).

Parmi les polyisocyanates aromatiques, l'invention concerne de préférence le 4,4'-diphenylméthane diisocyanate et tout particulièrement les MDI modifiés liquides.

A titre d'illustration de polyisocyanate aliphatique on citera l'hexaméthylène diisocyanate (HDI) et ses dérivés, le triméthylhéxaméthylène diisocyanate.

A titre d'illustration de polyisocyanate cycloaliphatique on citera l'isophorone diisocyanate (IPDI) et ses dérivés, le 4,4'-dicyclohexylméthanediisocyanate et le cyclohexyt diisocyanate (CHDI).

L'invention concerne de préférence l'IPDI.

Le diol contenant des fonctions acides neutralisées peut être par exemple l'acide diméthylolpropionique neutralisé par la triéthylamine.

On peut ajouter un catalyseur qui peut être choisi dans le groupe comprenant des amines tertiaires, des imidazoles et des composés organométalliques.

A titre d'illustration d'amines tertiaires, on peut citer le diaza-1,4 bicyclo [2.2.2]octane (DABCO).

A titre d'illustration de composés organométalliques, on peut citer le dibutyldilaurate d'étain, le dibutyldiacétate d'étain.

Les quantités de catalyseur peuvent être comprises entre 0,01 et 5 parties en poids pour 100 parties en poids de polyol (polydiène à terminaisons hydroxyles et diol à fonction acide).

La quantité d'isocyanate est avantageusement telle que le rapport molaire NCO/OH est supérieur à 1,4 et de préférence compris entre 1,5 et 2,5. Les fonctions OH sont celles du polydiène et du diol à fonction acide.

La quantité de diol contenant des fonctions acides neutralisées est avantageusement telle qu'on ait 0,2 à 2,5 fonction carboxylate par chaîne de polydiène à terminaisons hydroxyles. Le solvant est tel qu'il permette d'effectuer la synthèse du prépolymère et d'être éliminé facilement à l'étape (d). On utilise de préférence la méthyléthylcétone (MEK). Cette étape (a) s'effectue dans des réacteurs agités conventionnels.

La quantité d'eau de l'étape (b) est telle qu'on obtienne à l'étape (d) une dispersion contenant 30 à 40 % en poids de matières solides. L'introduction de l'eau dans l'étape (b) se fait avantageusement dans un réacteur agité. Cette étape (b) peut s'effectuer à toute pression, il est plus simple d'être à la pression atmosphérique. La température peut être comprise entre l'ambiante (20°C) et 80°C et de préférence est l'ambiante (20°C).

A titre d'allongeur de chaîne de l'étape (c) on peut citer l'hydrazine en solution aqueuse ou l'éthylène diamine. La réaction peut s'effectuer entre l'ambiante et 80°C et de préférence à l'ambiante à la pression atmosphérique. L'allongement des chaînes peut être suivi par dosage volumétrique des fonctions isocyanate dans la dispersion au cours du temps. La durée de réaction est de l'ordre de 10 minutes.

L'étape (d) peut être par exemple une distillation qu'on effectue dans tout dispositif habituel.

Les dispersions aqueuses obtenues ne contiennent essentiellement plus de solvant, elles ont une faible viscosité, par exemple de 4 à 10 centipoises (ou milli-Pascal-seconde m.Pa.s) et contiennent 30 à 40 % en poids de solides.

Les revêtements obtenus ont une très bonne résistance à l'humidité et une très basse température de transition vitreuse pouvant atteindre par exemple -60 à -70°C.

Les revêtements sont donc flexibles à basse température.

La présente invention concerne aussi les dispersions aqueuses en elles-mêmes. Elles contiennent moins de 0,2 % en poids de solvant. Leur viscosité est avantageusement inférieure à 15 m.Pa.s et de préférence de l'ordre de 4 à 5 m.Pa.s. Elles contiennent 30 à 40 % en poids de solides. La taille des particules est inférieure à 100 nm et avantageusement comprise entre 50 et 80 nm.

Les revêtements obtenus par évaporation de ces dispersions ont une reprise en eau inférieure à 2 % avantageusement de l'ordre de 1 % pour une exposition à 20°C pendant 24 heures.

La reprise en eau est inférieure à 3 % et est de l'ordre de 1,7 % pour une exposition à 100°C pendant 2 heures.

Exemples

1. Produits

PolyBd R45 HT : polybutadiène hydroxy téléchélique hydrophobe de Mn 2800 g/mol possédant un indice hydroxy de 0,83 meq/g et une viscosité de 5000 m.Pa.s à 30°C, commercialisé par la société ELF ATOCHEM.

PolyBd R20LM : polybutadiène hydroxy téléchélique de Mn 1370 g/mol possédant un indice hydroxy de 1,70 meq/g et une viscosité de 1600 m.Pa.s à 30°C, commercialisé par la société ELF ATOCHEM.

DMPA : Acide diméthylolpropionique possédant une masse moléculaire de 134 g/mol commercialisé par la société ANGUS.

IPDI : Isophorone diisocyanate possédant un taux de NCO de 37,8 % produit par la société HÜLS.

DBTL : Dibutyl dilaurate d'étain commercialisé par la société AIR PRODUCTS.

TEA : Triéthylamine commercialisée par la société BASF.

Hydrate d'hydrazine : Solution aqueuse d'hydrazine à 63,5 % dans l'eau commercialisée par la société ELF ATOCHEM.

2. Composition

| | A | B |
|---|---|---|
| PolyBd R45 HT | 243 | 243 |
| PolyBd R20LM | | 147 |
| DMPA | 11,1 | 37,9 |
| DBTL | 0,4 | 0,49 |
| MEK | 490 | |
| NMP | | 66,8 |
| TEA | 8,37 | 28,7 |
| Hydrate d'hydrazine | 5,7 | 27,7 |
| IPDI | 64,2 | 227,2 |
| Eau | 763 | 2171 |

A est conforme à l'invention. B est conforme au brevet US 5672653.

3. Procédés

Essai A (conforme à l'invention)

Dans un erlenmeyer sont mélangés le DMPA, la TEA, le DBTL et 200 g de MEK. L'ensemble est homogénéisé jusqu'à dissolution de tous les ingrédients dans le solvant. Pendant ce temps, le PolyBd R45HT est dégazé pendant une heure à 80°C sous vide dans un réacteur double enveloppe.

Le mélange DMPA / TEA / DBTL / MEK est ajouté dans le PolyBd refroidi à 40°C ainsi que le reste de MEK. Après une brève homogénéisation, l'IPDI est ajouté. Le mélange est porté à reflux de MEK. On laisse la réaction se dérouler pendant 4 heures et on dépotte le prépolymère obtenu.

A 247 g d'eau permutée placée dans un réacteur, sont ajoutés 265 g du prépolymère ci-dessus, au goutte à goutte en 90 minutes. A la fin de cette coulée, 1,93 g d'hydrate d'hydrazine est coulé puis l'agitation (turbine à pales inclinées à 45°, 500 t/min) est encore laissée 5 minutes.

La dispersion aqueuse est alors distillée sous pression réduite de sa MEK à l'aide d'un évaporateur rotatif puis filtrée sur toile filtrante à 100 µm.

Essai B (non conforme à l'invention)

Dans un réacteur, on dissout à 60°C le DMPA dans la NMP. Cette solution est alors introduite dans un réacteur double enveloppe préchauffé à 60°C et mis sous azote. On incorpore ensuite le PolyBd R45HT, le PolyBd R20LM et le DBTL. Après homogénéisation, l'IPDI est introduit. La réaction a lieu pendant 4 heures à 60°C.

La TEA est alors introduite dans le réacteur et le milieu réactionnel est agité 30 minutes.

On ajoute alors l'eau en coulée pendant 10 minutes et le milieu réactionnel est agité à l'aide d'une turbine à pales inclinées à 45 ° à 1000 t/min. L'hydrate d'hydrazine est alors introduite goutte à goutte sous agitation. L'agitation est encore laissée 30 minutes.

4. Caractérisation

4.1. Stabilité des prépolymères d'isocyanate

Les prépolymères d'isocyanate selon A et B ont été caractérisés en fonction du temps. Leur viscosité à 25°C a été mesurée à l'aide d'un viscosimètre Brookfield RVT DV3 ; jo correspondant au jour de leur synthèse.

| | A | B |
|---|---|---|
| jo | 30 cP | 1700 cP |
| jo + 7 j | 85 cP | gélifié |
| jo + 14 j | 735 cP | gélifié |

Ces résultats montrent que le prépolymère selon A possède une viscosité initiale plus faible et une meilleure aptitude au stockage.

4.2. Caractéristiques des PUD

Les tailles moyennes des particules de PUD ont été mesurées à l'aide d'un appareil de marque MALVERN.
La viscosité des PUD a été mesurée à 25°C à l'aide d'un adaptateur de petits échantillons avec un viscosimètre Brookfield type RVT DV3. Le pH des émulsions a été mesuré à l'aide d'un pH-mètre METROHM.
La Température Minimale de Filmification a été mesurée à l'aide d'un appareil de marque GÖTT.FERT.
La teneur en Composés Organiques Volatiles (VOC) a été mesurée par chromatographie.
L'allongement et la contrainte à la rupture des matériaux ont été mesurés selon la norme DIN 53504 ; la dureté Shore selon DIN 53505.
La reprise en eau des matériaux correspond à l'augmentation de masse constatée suite à un traitement dans l'eau dans les conditions précisées.

| | A | B |
|---|---|---|
| Taille de particules | 70 nm | 110 nm |
| Viscosité (25°C) | 7,2 cP | 6,1 cP |
| pH | 7,2 | 7,2 |
| TMF | pas de TMF | pas de TMF |
| Composé Organique Volatile (%) | <0,2 (MEK) | 2,5 (NMP) |
| Contrainte à la Rupture (MPa) | 6,3 | 12,2 |
| Allongement à la rupture (%) | 500 | 260 |
| Dureté Shore | 67 A | 46 D |
| Reprise en eau : | | |
| 24 h - 20°C | 1 % | 45 % |
| 2 h - 100°C | 1,7 % | 90 % |

Ce tableau démontre que les émulsions selon l'invention contiennent des taux très réduits de VOC et présentent d'excellentes résistances à l'hydrolyse.

**Revendications**

1. Procédé de préparation de dispersions aqueuses de polyuréthane comprenant les étapes suivantes :

   (a) formation d'un prépolymère à fonctions NCO par réaction dans un solvant d'un polyisocyanate, d'un polydiène à terminaisons hydroxyles et de masse Mn d'au moins 2000 et d'un diol contenant des fonctions acides neutralisées, les fonctions NCO étant en excès par rapport aux fonctions OH
   (b) dispersion du prépolymère dans l'eau

(c) addition d'un allongeur de chaîne de type diamine
(d) évaporation du solvant pour obtenir une dispersion aqueuse de polyuréthane urée,

avec le solvant tel qu'il permette d'effectuer la synthèse du prépolymère et de sorte que la dispersion aqueuse contienne moins de 0,2% en poids de solvant.

**2.** Procédé selon la revendication 1, dans lequel la quantité de diol contenant des fonctions acides neutralisées est telle qu'on ait un rapport de 0,2 à 2,5 fonctions carboxylate par chaîne du polydiène à terminaisons hydroxyles.

**3.** Procédé selon l'une quelconque des revendications 1 et 2, dans lequel le polydiène à terminaisons hydroxyles est un polybutadiène à terminaisons hydroxyles.

**4.** Procédé selon l'une quelconque des revendications 1 à 3, dans lequel le diol à fonctions acides est l'acide diméthylolpropionique.

**5.** Procédé selon l'une quelconque des revendications 1 à 4, dans lequel le solvant est la méthyléthylcétone.

**6.** Procédé selon l'une quelconque des revendications 1 à 5, dans lequel l'isocyanate est l'isophorone diisocyanate (IPDI).

**7.** Dispersions aqueuses de polyuréthane pouvant s'obtenir par un procédé tel que défini selon l'une des revendications 1 à 6.

## Patentansprüche

**1.** Verfahren zur Herstellung von wäßrigen Polyurethandispersionen, bei dem man:

(a) ein NCO-funktionelles Prepolymer herstellt, indem man ein Polyisocyanat, ein Polydien mit Hydroxylendgruppen und einer Masse Mn von mindestens 2000 und ein Diol mit neutralisierten Säurefunktionen in einem Lösungsmittel umsetzt, wobei die NCO-Funktionen gegenüber den OH-Funktionen im Überschuß vorliegen,

(b) das Prepolymer in Wasser dispergiert,

(c) ein Diamin-Kettenverlängerungsmittel zugibt und

(d) das Lösungsmittel abdampft, wobei man eine wäßrige Polyurethanharnstoffdispersion erhält,

wobei das Lösungsmittel so gewählt wird, daß man damit die Synthese des Preopolymers durchführen kann und daß die wäßrige Dispersion weniger als 0,2 Gew.-% Lösungsmittel enthält.

**2.** Verfahren nach Anspruch 1, bei dem man die Menge von Dio1 mit neutralisierten Säurefunktionen so wählt, daß sich ein Verhältnis von Carboxylatfunktionen pro Polydienkette mit Hydroxylendgruppen von 0,2 bis 2,5 ergibt.

**3.** Verfahren nach Anspruch 1 oder 2, bei dem man als Polydien mit Hydroxylendgruppen ein Polybutadien mit Hydroxylendgruppen einsetzt.

**4.** Verfahren nach einem der Ansprüche 1 bis 3, bei dem man als Diol mit Säurefunktionen Dimethylolpropionsäure einsetzt.

**5.** Verfahren nach einem der Ansprüche 1 bis 4, bei dem man als Lösungsmittel Methylethylketon einsetzt.

**6.** Verfahren nach einem der Ansprüche 1 bis 5, bei dem man als Isocyanat Isophorondiisocyanat (IPDI) einsetzt.

**7.** Wäßrige Polyurethandispersionen, die nach einem Verfahren gemäß einem der Ansprüche 1 bis 6 erhältlich sind.

## Claims

1. Process for preparing aqueous polyurethane dispersions, which comprises the following steps:

    (a) formation of a prepolymer having NCO functional groups by reaction, in a solvent, of a polyisocyanate, a polydiene having hydroxyl terminal groups and a molecular weight Mn, of at least 2000 and a diol containing neutralized acid functional groups, the NCO functional groups being in excess with respect to the OH functional groups;
    (b) dispersion of the prepolymer in water;
    (c) addition of a diamine-type chain extender;
    (d) evaporation of the solvent in order to obtain an aqueous polyurethane-urea dispersion,

    with the solvent such that it allows the prepolymer to be synthesized and so that the aqueous dispersion contains less than 0.2% solvent by weight.

2. Process according to Claim 1, in which the amount of diol containing neutralized acid functional groups is such that there may be from 0.2 to 2.5 carboxylate functional groups per chain of polydiene having hydroxyl terminal groups.

3. Process according to either of Claims 1 and 2, in which the polydiene having hydroxyl terminal groups is a polybutadine having hydroxyl terminal groups.

4. Process according to any one of Claims 1 to 3, in which the diol having acid functional groups is dimethylolpropionic acid.

5. Process according to any one of Claims 1 to 4, in which the solvent is methyl ethyl ketone.

6. Process according to any one of Claims 1 to 5, in which the isocyanate is isophorone diisocyanate (IPDI).

7. Aqueous polyurethane dispersions that can be obtained by a process as defined according to one of Claims 1 to 6.